# EUROPÄISCHE PATENTANMELDUNG

(11) **EP 4 614 056 A1**
(43) Veröffentlichungstag der Anmeldung: **10.09.2025**
(21) Anmeldenummer: 24162320.6
(22) Anmeldetag: 08.03.2024
(51) Int. Cl.: F17C 13/00, F16L 41/03

(54) **VERTEILER UND H2-HOCHDRUCKSYSTEM**

(71) Anmelder: Robert Bosch GmbH, 70442 Stuttgart (DE)
(72) Erfinder: Lenikus, Martin, 58606 Jihlava Vysocina (CZ); Priborsky, Pavel, 58606 Jihlava Vysocina (CZ)

(57) **Zusammenfassung**

Die vorliegende Erfindung betrifft einen Verteiler (110) für ein H2-Hochdrucksystem (100), wobei der Verteiler (110) einen Hauptkörper (120) mit einer Anzahl von radialen und/oder axialen Schnittstellen (124) zum Verbinden des Verteilers (110) mit einer Betankungsinfrastruktur (150) und/oder dem H2-Hochdrucksystem (100) umfasst, wobei die Anzahl von Schnittstellen (124) miteinander verbunden sind, um Fluid über eine Hauptbohrung (122) entlang dem Hauptkörper (120) zu verteilen, wobei die Hauptbohrung (122) in dem Hauptkörper (120) als eine Sackbohrung (126) gestaltet ist. Ferner betrifft die Erfindung ein H2-Hochdrucksystem (100), das mindestens einen Verteiler (110) umfasst.

## Beschreibung

### Stand der Technik

Bekannte Verteiler für Hochdrucksysteme für Wasserstoff umfassen verschiedene Strukturen mit einem oder mehreren Einlässen und einer Anzahl von Auslässen zur Verteilung des Wasserstoffs. Die bekannten Verteiler für Hochdrucksysteme für Wasserstoff sind bis 700 bar und in Zukunft sogar noch höher ausgelegt. Die Druckbeträge müssen bei der Entwicklung von Verteilern berücksichtigt werden. Die Verwendung der Verteiler mit einem Gas wie Wasserstoff erfordert eine wohlüberlegte Wahl des Materials für die Verteiler.

Die bekannten Verteiler umfassen axiale und/oder radiale Schnittstellen zum Verbinden des Verteilers mit einer Betankungsinfrastruktur, Tanks und/oder anderen Einheiten eines H2-Hochdrucksystems. Typischerweise werden Rohre verwendet, um den Verteiler mit den anderen Einheiten des H2-Hochdrucksystems zu verbinden. Die bekannten Verteiler umfassen eine Hauptbohrung zum Verbinden der axialen und/oder radialen Schnittstellen miteinander zur Verteilung des Wasserstoffs. In der Regel umfasst ein Verteiler mehr Schnittstellen als für einen bestimmten Anwendungsfall erforderlich sind. Die ungenutzten Schnittstellen werden durch Dichtungsmittel, beispielsweise Verschlussschrauben abgedichtet und/oder die ungenutzten Schnittstellen werden zur Installation von Sensoreinheiten verwendet. Insbesondere bei axialen Schnittstellen eines Verteilers für ein H2-Hochdrucksystem beansprucht eine ungenutzte Schnittstelle mit einer Verschlussschraube ungünstigerweise ein übermäßiges Raumvolumen in einem sehr engen Arbeitsraumumfeld. Die typischen Größen bekannter Schnittstellen sind so gestaltet, dass sie eine gewisse Wasserstoffströmung gestatten. Wenn solch eine Schnittstelle eines Verteilers für die Installation von Sensoreinheiten verwendet wird, stellt die Schnittstelle mehr Raum zur Verfügung, als für die Sensoreinheit erforderlich ist. Bekannte Sensoreinheiten werden beispielsweise mit einem Adapterstecker in Schnittstellen eines Verteilers installiert.

### Offenbarung der Erfindung

Die Erfindung beansprucht einen Verteiler für ein H2-Hochdrucksystem mit den Merkmalen des unabhängigen Anspruchs 1. Ferner offenbart die Erfindung ein H2-Hochdrucksystem mit mindestens einem Verteiler mit den Merkmalen des unabhängigen Anspruchs 12. Weitere Vorteile und Einzelheiten der Erfindung ergeben sich aus den abhängigen Ansprüchen, der Beschreibung und den Zeichnungen. In diesem Zusammenhang gelten in Bezug auf den erfindungsgemäßen Verteiler beschriebene Merkmale natürlich jeweils auch in Bezug auf das H2-Hochdrucksystem und umgekehrt, so dass hinsichtlich der Offenbarung betreffs der einzelnen Aspekte der Erfindung stets eine wechselseitige Bezugnahme erfolgt oder erfolgen kann.

Gemäß einem ersten Aspekt der Erfindung offenbart die Erfindung einen Verteiler für ein H2-Hochdrucksystem. Der Verteiler umfasst einen Hauptkörper mit einer Anzahl von radialen und/oder axialen Schnittstellen zum Verbinden des Verteilers mit einer Betankungsinfrastruktur und/oder dem H2-Hochdrucksystem, wobei die mehreren Schnittstellen miteinander verbunden sind, um Fluid über eine Hauptbohrung entlang dem Hauptkörper zu verteilen, wobei die Hauptbohrung in dem Hauptkörper als eine Sackbohrung gestaltet ist, insbesondere wobei der Verteiler mit einem optimierten Sackbohrungsende zur Sicherstellung einer entsprechenden Ermüdungsbeständigkeit des Verteilers und einer minimierten Kerbwirkung in diesem Bereich gestaltet ist.

Der Hauptkörper des Verteilers umfasst vorzugsweise eine zylindrische Form. Die Hauptfunktion des Verteilers besteht darin, Wasserstoff zwischen den axialen und/oder radialen Schnittstellen zu verteilen. Die axialen und radialen Schnittstellen sind hinsichtlich der Funktion als Eingangs- und/oder Ausgangsschnittstellen vorzugsweise austauschbar. Die radialen Schnittstellen erstrecken sich radial vom Hauptkörper aus. Vorzugsweise erstrecken sich die Anzahl von radialen Schnittstellen vom Hauptkörper aus parallel zueinander und/oder in einer Linie miteinander.

Der Verteiler umfasst den Hauptkörper, der vorzugsweise als ein einziges Materialstück verstanden wird. Unter dem Hauptkörper wird vorzugsweise ein geradliniger Hauptkörper und/oder ein Hauptkörper entlang einer virtuellen Achse verstanden. Die axialen Schnittstellen des Verteilers sind vorzugsweise in einer Linie mit der virtuellen Achse des Hauptkörpers angeordnet. Die radialen Schnittstellen sind vorzugsweise radial bezüglich der virtuellen Achse des Hauptkörpers angeordnet. Der Verteiler umfasst vorzugsweise nur eine einzige oder keine axiale Schnittstelle. Der Verteiler umfasst vorzugsweise eine Anzahl von radialen Schnittstellen, vorzugsweise mindestens fünf oder mehr.

Der Hauptkörper umfasst ferner eine Hauptbohrung entlang dem Hauptkörper. Der Wasserstoff wird über die Hauptbohrung entlang dem Hauptkörper auf die Schnittstellen verteilt. Unter der Hauptbohrung wird vorzugsweise ein aufgebohrter, gebohrter und/oder anderweitig bearbeiteter Hohlraum in dem Hauptkörper verstanden. Die Hauptbohrung ist als eine Sackbohrung gestaltet. Anders ausgedrückt ist die Hauptbohrung nicht komplett durch den Hauptkörper des Verteilers hindurch gebohrt. Vorzugsweise umfasst die Hauptbohrung nur eine einzige axiale Schnittstelle einen einem einzigen offenen Beginn der Hauptbohrung. Dabei erfordert der Verteiler einen kleineren Arbeitsraum, da ein nicht existierendes zweites Ende der Hauptbohrung nicht mit einem Dichtungsmittel, wie z. B. einer Verschlussschraube, abgedichtet werden muss. Die Sackbohrung wird vorzugsweise mit einer Bohrvorrichtung, insbesondere einem Kanonenbohrerwerkzeug, ausgearbeitet. Die Sackbohrung wird vorzugsweise in einem einzigen Durchlauf und/oder einem einzigen Bohrprozessschritt ausgearbeitet. Der einzige Bearbeitungsschritt gestattet eine höhere Ermüdungsbeständigkeit durch Vermeiden scharfer Kanten in der Hauptbohrung und/oder an dem Ende der Hauptbohrung.

Die Sackbohrung ist vorzugsweise von einer Durchgangsbohrung verschieden, da die Sackbohrung vorzugsweise als eine Bohrung verstanden wird, die nur in einem Teil der Länge des Hauptkörpers ausgearbeitet wird. Anders ausgedrückt, die Tiefe der Sackbohrung ist vorzugsweise kleiner als die Länge des Hauptkörpers. Dabei weist die Sackbohrung vorzugsweise nur eine axiale Öffnung auf.

Der Verteiler, bei dem die Hauptbohrung als eine Sackbohrung gestaltet ist, ermöglicht vorzugsweise, dass der Verteiler, insbesondere der Hauptkörper, kürzer und/oder mit einem kleineren Arbeitsraumbedarf als ein Verteiler mit einer Hauptbohrung, die als eine Durchgangsbohrung gestaltet ist, und/oder ein Verteiler mit zwei gegenüberliegenden axialen Schnittstellen gestaltet werden kann.

Das H2-Hochdrucksystem umfasst vorzugsweise mindestens einen Tank für Wasserstoff und/oder mindestens ein Verbrauchermittel für Wasserstoff, beispielsweise einen Motor und/oder eine Antriebseinheit eines Fahrzeugs. Unter der Betankungsinfrastruktur wird vorzugsweise eine Art von Tankstelle, eine stationäre oder mobile Tankeinheit und/oder eine andere Quelle von Kraftstoff, vorzugsweise Wasserstoff, verstanden.

Der Verteiler umfasst vorzugsweise mindestens eine Eingangsschnittstelle, während die übrigen Schnittstellen vorzugsweise als Ausgangsschnittstellen verwendet werden und/oder durch die mindestens eine Verschlussschraube oder die mindestens eine Verschlussschraube zusammen mit einer Dichtungsplatte verschlossen werden.

Der auf diese Art und Weise gestaltete Verteiler ist besonders vorteilhaft, da der Verteiler eine vorteilhafte Verteilung von Wasserstoff und eine Verbindung mit einer Betankungsinfrastruktur und/oder dem H2-Hochdrucksystem durch Anzahl von Schnittstellen ermöglicht, wobei dadurch, dass die Hauptbohrung als eine Sackbohrung gestaltet ist, auf eine besonders einfache Art und Weise ein vorteilhaft kleiner Arbeitsraum und weniger Material für den Verteiler benötigt wird.

Gemäß einer vorteilhaften Ausgestaltung der Erfindung wird ein Verteiler bereitgestellt, wobei die Hauptbohrung einen ersten Durchmesser umfasst, wobei der erste Durchmesser aus einer ersten axialen Richtung ausgearbeitet wird, insbesondere wobei der erste Durchmesser zwischen 6 mm und 13 mm, insbesondere zwischen 6,5 mm und 12 mm, beträgt. Vorzugsweise umfasst die Hauptbohrung den ersten Durchmesser über die gesamte Länge der Hauptbohrung hinweg oder zumindest im Wesentlichen über die gesamte Länge der Hauptbohrung hinweg. Die Formulierung "X oder im Wesentlichen X" soll im Kontext der Erfindung als eine mögliche geringfügige Abweichung, beispielsweise aufgrund von Herstellungstoleranzen, Material- und/oder Prozesseigenschaften, durch die die zugrunde liegende beabsichtigte Funktion des Merkmals nicht geändert wird, verstanden werden. Vorzugsweise umfasst die Hauptbohrung einen einzigen ersten Durchmesser.

Die erste axiale Richtung wird vorzugsweise als eine Richtung entlang der zuvor erwähnten virtuellen Achse des Hauptkörpers und/oder der Hauptbohrung verstanden. Anders ausgedrückt wird die Hauptbohrung vorzugsweise von nur einer Seite aus und/oder in nur einer Richtung des Hauptkörpers ausgearbeitet. Der auf diese Art und Weise gestaltete Verteiler ist besonders vorteilhaft, da der Verteiler eine vorteilhafte Verteilung von Wasserstoff ermöglicht und die Gestaltung der Hauptbohrung auf eine besonders einfache Art und Weise einen vorteilhaft kleinen Arbeitsraum für den Verteiler erfordert.

Gemäß einer vorteilhaften Ausgestaltung der Erfindung wird ein Verteiler bereitgestellt, wobei der Verteiler eine Sensorbohrung oder eine spezielle Gestaltung einer zweiten axialen Schnittstelle umfasst, wobei die Sensorbohrung oder die spezielle Gestaltung der zweiten axialen Schnittstelle aus einer zweiten axialen Richtung ausgearbeitet wird, insbesondere wobei die erste axiale Richtung in einer Linie mit der zweiten axialen Richtung und dieser entgegengesetzt angeordnet ist, insbesondere wobei die Sensorbohrung oder die spezielle Gestaltung der zweiten axialen Schnittstelle mindestens eine Sensoreinheit zum Messen in der Hauptbohrung umfasst. Die Sensorbohrung oder die spezielle Gestaltung der zweiten axialen Schnittstelle stellt einen Raum und/oder Mittel für die Installation einer Sensoreinheit bereit. Die Sensorbohrung oder die spezielle Gestaltung der zweiten axialen Schnittstelle und die Hauptbohrung sind zumindest zum Teil verbunden und/oder treffen in dem Hauptkörper aufeinander. Die Sensoreinheit ist vorzugsweise an der Sensorbohrung oder der speziellen Gestaltung der zweiten axialen Schnittstelle angebracht, damit verschraubt, verklebt, verpresst und/oder anderweitig damit und/oder darin verbunden.

Die zweite Axialrichtung wird vorzugsweise als eine Richtung entlang der zuvor erwähnten virtuellen Achse des Hauptkörpers und/oder der Hauptbohrung verstanden. Anders ausgedrückt wird die Sensorbohrung oder die spezielle Gestaltung der zweiten axialen Schnittstelle vorzugsweise von nur einer Seite und/oder in nur einer Richtung des Hauptkörpers ausgearbeitet, insbesondere wobei die erste axiale Richtung in einer Linie mit der zweiten axialen Richtung und dieser entgegengesetzt angeordnet ist. Anders ausgedrückt wird die Sensorbohrung oder die spezielle Gestaltung der zweiten axialen Schnittfläche vorzugsweise von einer im Vergleich zur Hauptbohrung entgegengesetzten Seite ausgearbeitet.

Der auf diese Art und Weise gestaltete Verteiler ist besonders vorteilhaft, da der Verteiler eine vorteilhafte Verteilung von Wasserstoff ermöglicht und die Gestaltung der Hauptbohrung einen vorteilhaft kleinen Arbeitsraum für den Verteiler mit einer Sensorbohrung auf eine relativ einfache Art und Weise erfordert.

Gemäß einer vorteilhaften Ausgestaltung der Erfindung wird ein Verteiler bereitgestellt, wobei die Sensorbohrung oder die spezielle Gestaltung der zweiten axialen Schnittstelle einen zweiten Durchmesser umfasst, wobei der erste Durchmesser größer als der zweite Durchmesser ist, insbesondere um einen Faktor von 1,5 bis 2,5. Der zweite Durchmesser der Sensorbohrung oder der speziellen Gestaltung der zweiten axialen Schnittstelle ist vorzugsweise kleiner als der erste Durchmesser der Hauptbohrung. Damit stellt die Sensorbohrung oder die spezielle Gestaltung der zweiten axialen Schnittstelle genügend Raum zur Installation einer Sensoreinheit bereit, ermöglicht jedoch noch einen kleinen Arbeitsraum für den Verteiler. Da der erste Durchmesser der Hauptbohrung größer als der zweite Durchmesser der Sensorbohrung oder der speziellen Gestaltung der zweiten axialen Schnittstelle ist, ist es am vorteilhaftesten, die zwei Durchmesser und/oder Bereiche von verschiedenen, insbesondere gegenüberliegenden, Seiten und/oder Richtungen des Verteilers aus auszuarbeiten, wie zuvor beschrieben wurde. Dabei sind keine Methoden und Werkzeuge zum Hinterschneiden der Hauptbohrung und/oder der Sensorbohrung oder der speziellen Gestaltung der zweiten axialen Schnittstelle erforderlich, und die Produktion des Verteilers wird vereinfacht und/oder Kosten werden reduziert. Der auf diese Art und Weise gestaltete Verteiler ist besonders vorteilhaft, da der Verteiler eine vorteilhafte Verteilung von Wasserstoff ermöglicht und die Gestaltung der Hauptbohrung einen vorteilhaft kleinen Arbeitsraum für den Verteiler mit einer Hinterschneidung einer Sensorbohrung oder der speziellen Gestaltung der zweiten axialen Schnittstelle auf eine relativ einfache Art und Weise erfordert.

Gemäß einer vorteilhaften Ausgestaltung der Erfindung wird ein Verteiler bereitgestellt, wobei der Hauptkörper einen Übergangsbereich zwischen dem ersten Durchmesser der Hauptbohrung und dem zweiten Durchmesser der Sensorbohrung oder der speziellen Gestaltung der zweiten axialen Schnittstelle umfasst, wobei der Übergangsbereich mindestens eine Abrundung und/oder mindestens eine Abschrägung umfasst. Der erste Durchmesser der Hauptbohrung und der zweite Durchmesser der Sensorbohrung oder der speziellen Gestaltung der zweiten axialen Schnittstelle treffen vorzugsweise in dem Hauptkörper des Verteilers aufeinander. Zur Erhöhung der Ermüdungsbeständigkeit des Verteilers wird eine scharfe Kante an dem Übergangsbereich durch Hinzufügen mindestens einer Abrundung und/oder mindestens einer Abschrägung vermieden. Die Abrundung und/oder die Abschrägung werden vorzugsweise in einem Bereich von 0,1 mm bis 1,0 mm für den Radius und/oder die Abschrägung gewählt. Die mindestens eine Abrundung und/oder die mindestens eine Abschrägung ermöglichen vorzugsweise das Entfernen eines möglichen Grats an dem Übergangsbereich, da die Hauptbohrung und die Sensorbohrung oder die spezielle Gestaltung der zweiten axialen Schnittstelle vorzugsweise von verschiedenen, insbesondere gegenüberliegenden, Seiten aus ausgearbeitet werden, wie zuvor beschrieben wurde. Der auf diese Art und Weise gestaltete Verteiler ist besonders vorteilhaft, da der Verteiler und der Übergangsbereich eine vorteilhafte und gleichmäßige Verteilung von Wasserstoff ermöglichen und die Gestaltung der Hauptbohrung einen vorteilhaft kleinen Arbeitsraum für den Verteiler auf eine relativ einfache Art und Weise erfordert.

Gemäß einer vorteilhaften Ausgestaltung der Erfindung wird ein Verteiler bereitgestellt, wobei die Hauptbohrung, insbesondere die Sackbohrung, einen abgerundeten Endbereich umfasst, insbesondere wobei ein Radius des abgerundeten Endbereichs der Hälfte des ersten Durchmessers entspricht oder größer als die Hälfte des ersten Durchmessers ist. Der abgerundete Endbereich wird vorzugsweise bei demselben Schritt ausgearbeitet, bei dem die Hauptbohrung ausgearbeitet wird. Dabei wird der abgerundete Endbereich vorzugsweise durch eine Form der Spitze des Bohrwerkzeugs für die Ausarbeitung der Hauptbohrung gestaltet. Ein abgerundeter Endbereich erhöht vorteilhafterweise die Ermüdungsbeständigkeit des Hauptkörpers, da scharfe Ecken und/oder Kanten in der Hauptbohrung vermieden oder zumindest minimiert werden. Vorzugsweise entspricht der Radius des abgerundeten Endbereichs der Hälfte des ersten Durchmessers oder ist größer als die Hälfte des ersten Durchmessers. Dabei wird ein Übergang zwischen dem Bereich der Hauptbohrung mit dem ersten Durchmesser und dem abgerundeten Endbereich glatt und/oder ohne scharfe Kanten gestaltet. Der auf diese Art und Weise gestaltete Verteiler ist besonders vorteilhaft, da der Verteiler, der abgerundete Endbereich und der Übergangsbereich eine vorteilhafte und gleichmäßige Verteilung von Wasserstoff ermöglichen und die Gestaltung der Hauptbohrung einen vorteilhaft kleinen Arbeitsraum für den Verteiler auf eine besonders einfache Art und Weise erfordert.

Gemäß einer vorteilhaften Ausgestaltung der Erfindung wird ein Verteiler bereitgestellt, wobei der abgerundete Endbereich und die Hauptbohrung mit dem ersten Durchmesser einen tangentialen Übergang aufweisen. Der tangentiale Übergang wird vorzugsweise dadurch ermöglicht, dass der zuvor erwähnte Radius des abgerundeten Endbereichs der Hälfte des ersten Durchmessers der Hauptbohrung entspricht. Der tangentiale Übergang stellt eine glatte Innenfläche des Verteilers und somit eine vorteilhafte Verteilung von Wasserstoff durch den Verteiler bereit. Der tangentiale Übergang ermöglicht ferner eine erhöhte Ermüdungsbeständigkeit für den Hauptkörper, wobei scharfe Ecken und/oder Kanten in der Hauptbohrung vermieden oder zumindest minimiert werden. Der auf diese Art und Weise gestaltete Verteiler ist besonders vorteilhaft, da der Verteiler, der abgerundete Endbereich und der tangentiale Übergang eine vorteilhafte und gleichmäßige Verteilung von Wasserstoff ermöglichen und die Gestaltung der Hauptbohrung einen vorteilhaft kleinen Arbeitsraum für den Verteiler auf eine besonders einfache Art und Weise erfordert.

Gemäß einer vorteilhaften Ausgestaltung der Erfindung wird ein Verteiler bereitgestellt, wobei der abgerundete Endbereich einen Mittelpunkt umfasst, wobei der Mittelpunkt in der Hauptbohrung, insbesondere in dem ersten Durchmesser der Hauptbohrung, angeordnet ist, und/oder wobei sich der abgerundete Endbereich um weniger als 180° um den Mittelpunkt herum erstreckt. Der Mittelpunkt wird vorzugsweise in Bezug auf den zuvor erwähnten Radius des abgerundeten Endbereichs aufgefasst. Der Mittelpunkt ist vorzugsweise an einem Ende der zylindrisch geformten Hauptbohrung angeordnet oder virtuell von dem Ende der zylindrisch geformten Hauptbohrung zurückgesetzt. Dabei ist der abgerundete Endbereich vorzugsweise als eine Halbkugel oder ein Teil einer Halbkugel gestaltet. Beispielhaft ist, wenn der Mittelpunkt an dem Ende der zylindrisch geformten Hauptbohrung angeordnet ist und der Radius des abgerundeten Endbereichs der Hälfte des ersten Durchmessers der Hauptbohrung entspricht, der abgerundete Endbereich als eine Halbkugel gestaltet. Als ein weiteres Beispiel ist, wenn der Mittelpunkt virtuell von dem Ende der zylindrisch geformten Hauptbohrung und in der Hauptbohrung zurückgesetzt ist, der Radius des abgerundeten Endbereichs größer als die Hälfte des ersten Durchmessers der Hauptbohrung für einen vorteilhaft Übergang von der Hauptbohrung zu dem abgerundeten Endbereich. Der abgerundete Endbereich dieses Beispiels ist als ein Teil einer Halbkugel gestaltet. Das Merkmal des abgerundeten Endbereichs, der sich um weniger als 180° um den Mittelpunkt herum erstreckt, wird vorzugsweise in Bezug auf einen Querschnitt des Verteilers, insbesondere einen Querschnitt entlang der Hauptbohrung und/oder durch den Mittelpunkt, aufgefasst. Der auf diese Art und Weise gestaltete Verteiler ist besonders vorteilhaft, da der Verteiler und die Gestaltung des abgerundeten Endbereichs eine vorteilhafte und gleichmäßige Verteilung von Wasserstoff ermöglichen und die Gestaltung der Hauptbohrung einen vorteilhaft kleinen Arbeitsraum für den Verteiler auf eine besonders einfache Art und Weise erfordert.

Gemäß einer vorteilhaften Ausgestaltung der Erfindung wird ein Verteiler bereitgestellt, wobei die Hauptbohrung einen Übergangswinkel umfasst, wobei sich der Übergangswinkel zwischen einer radialen Achse durch den Mittelpunkt und einer Übergangsachse durch den Mittelpunkt und einem Übergangspunkt zwischen dem abgerundeten Endbereich und der Hauptbohrung erstreckt, wobei der Übergangswinkel kleiner gleich 17°, vorzugsweise kleiner gleich 14°, beträgt. Die radiale Achse wird vorzugsweise als eine Achse, die radial durch den Mittelpunkt verläuft, aufgefasst, wobei das Merkmal des radialen Verlaufs in Bezug auf eine radiale Richtung der Hauptbohrung und/oder in Bezug auf die zuvor erwähnte virtuelle Achse entlang dem Hauptkörper aufgefasst wird. Die Übergangsachse wird vorzugsweise als eine Achse, die durch den Mittelpunkt sowie durch einen Übergangspunkt zwischen dem abgerundeten Endbereich und der Hauptbohrung verläuft, aufgefasst. Der Übergangspunkt wird vorzugsweise als ein Punkt an dem abgerundeten Ende der zylindrisch geformten Hauptbohrung aufgefasst. Anders ausgedrückt ist der Übergangspunkt auf einer Linie, an der die Hauptbohrung auf den abgerundeten Endbereich trifft, angeordnet. Das Merkmal des Übergangswinkels wird vorzugsweise in Bezug auf einen Querschnitt des Verteilers, insbesondere einen Querschnitt entlang der Hauptbohrung und/oder durch den Mittelpunkt, aufgefasst. Vorzugsweise wird der Übergangswinkel als ein Wert dafür, wie weit der Mittelpunkt von einem Ende oder einer Stirnebene der zylindrisch geformten Hauptbohrung zurückgesetzt ist, aufgefasst. Wenn beispielsweise der Übergangswinkel 0° beträgt, ist der Mittelpunkt in der Endebene der zylindrisch geformten Hauptbohrung angeordnet. Als ein anderes Beispiel ist, wenn der Übergangswinkel 14° beträgt, der Mittelpunkt virtuell am weitesten von der Endebene weg zum Inneren der Hauptbohrung hin angeordnet. Ein Übergangswinkel von 17° oder darunter ermöglicht, dass der Übergangsbereich zwischen dem abgerundeten Endbereich und der Hauptbohrung für eine gleichmäßige Wasserstoffverteilung vorteilhaft gestaltet ist. Der auf diese Art und Weise gestaltete Verteiler ist besonders vorteilhaft, da der Verteiler und die Gestaltung des Übergangswinkels eine vorteilhafte und gleichmäßige Verteilung von Wasserstoff ermöglichen und die Gestaltung der Hauptbohrung einen vorteilhaft kleinen Arbeitsraum für den Verteiler auf eine besonders einfache Art und Weise erfordert.

Gemäß einer vorteilhaften Ausgestaltung der Erfindung wird ein Verteiler bereitgestellt, wobei die Hauptbohrung, insbesondere die Sackbohrung, einen Grundbereich umfasst, wobei der Grundbereich eine axiale Wanddicke von 5 mm bis 20 mm, vorzugsweise 10 mm bis 15 mm, umfasst und/oder wobei der Grundbereich eine Reliefspitze umfasst, wobei die Reliefspitze von dem umliegenden Grundbereich vorragt. Der Grundbereich ist vorzugsweise gegenüber einer axialen Schnittstelle des Verteilers, insbesondere gegenüber der einzigen axialen Schnittstelle des Verteilers, angeordnet. Der Grundbereich ist vorzugsweise an dem Ende des ersten Durchmessers und/oder der Sackbohrung angeordnet. Die axiale Wanddicke wird vorzugsweise als eine Dicke des Hauptkörpers entlang der zuvor erwähnten virtuellen Achse entlang der Hauptbohrung aufgefasst. Die axiale Wanddicke stellt die strukturelle Festigkeit für den Verteiler, insbesondere den Hauptkörper, bereit, die erforderlich ist, um dem Druck eines H2-Hochdrucksystems standzuhalten. Die axiale Wanddicke erfordert hingegen vorteilhafterweise einen geringen Arbeitsraum für den Verteiler. Insbesondere im Vergleich zu einer axialen Schnittstelle erfordert die Sackbohrung mit der axialen Wanddicke vorteilhafterweise weniger Arbeits- oder Installationsraum.

Die Reliefspitze wird vorzugsweise als ein vorragendes Element an dem Grundbereich der Sackbohrung und/oder an dem abgerundeten Endbereich aufgefasst. Die Reliefspitze ist vorzugsweise punktsymmetrisch und/oder mit einem stumpfen Winkel von vorzugsweise 130-180°, insbesondere 145-180°, zu der Spitze und/oder der Mitte der Spitze hin gestaltet. Die Reliefspitze ist vorzugsweise mittig an dem Grundbereich der Sackbohrung und/oder an dem abgerundeten Endbereich angeordnet. Die Reliefspitze ist in der Richtung der Sackbohrung ausgerichtet, wobei die Basis der Spitze zum Grundbereich der Sackbohrung und/oder an dem abgerundeten Endbereich ausgerichtet ist. Die Druckspitze ermöglicht eine vorteilhafte strukturelle Festigkeit für den Verteiler, insbesondere den Hauptkörper, um dem Druck eines H2-Hochdrucksystems standzuhalten.

Der auf diese Art und Weise gestaltete Verteiler ist besonders vorteilhaft, da der Verteiler und die axiale Wanddicke und/oder die Reliefspitze eine vorteilhafte und gleichmäßige Verteilung von Wasserstoff ermöglichen und die Gestaltung der Hauptbohrung einen vorteilhaft kleinen Arbeitsraum für den Verteiler auf eine relativ einfache Art und Weise erfordert.

Gemäß einer vorteilhaften Ausgestaltung der Erfindung wird ein Verteiler bereitgestellt, wobei der Verteiler, insbesondere der Hauptkörper, zumindest zum Teil aus Stahl, insbesondere austenitischem Edelstahl, hergestellt ist und/oder der Verteiler zumindest zum Teil durch ein Schmiedeverfahren, ein Gussverfahren, ein Bearbeitungsverfahren, ein 3D-Druckverfahren und/oder ein Druckgussverfahren hergestellt wird. Die Wahl von austenitischem Edelstahl für den Verteiler, insbesondere für den Hauptkörper, ist besonders vorteilhaft für die Verwendung des Verteilers mit einem H2-Hochdrucksystem, da austenitischer Edelstahl eine hohe Beständigkeit gegen Wasserstoffversprödung aufweist. Zu den bevorzugten Verfahren zur Herstellung des Verteilers gehören ein Bearbeitungsverfahren in Kombination mit einem Schmiedeverfahren, einem Gussverfahren oder 3D-Druck, um die Produktionskosten zu senken, die Qualität des Verteilers zu erhöhen und/oder einen einfachen und schnellen Produktionszyklus zu ermöglichen. Der auf diese Art und Weise gestaltete Verteiler ist besonders vorteilhaft, da die Wahl des Materials für den Verteiler eine vorteilhafte und gleichmäßige Verteilung von Wasserstoff ermöglicht und die Gestaltung der Hauptbohrung einen vorteilhaft kleinen Arbeitsraum für den Verteiler auf eine besonders einfache Art und Weise erfordert.

Gemäß dem zweiten Aspekt der Erfindung offenbart die Erfindung ein H2-Hochdrucksystem. Das H2-Hochdrucksystem umfasst mindestens einen Verteiler gemäß dem ersten Aspekt. Das beschriebene H2-Hochdrucksystem weist alle Vorteile auf, die bereits für den Verteiler gemäß dem ersten Aspekt der Erfindung beschrieben wurden. Der Verteiler und das H2-Hochdrucksystem sind vorzugsweise durch mindestens eine der radialen und/oder axialen Schnittstellen aneinander befestigt.

Nachfolgend werden ein Verteiler für ein H2-Hochdrucksystem und ein H2-Hochdrucksystem gemäß der Erfindung unter Bezugnahme auf Figuren näher erläutert. Die Figuren zeigen schematisch:
- Figur 1: einen Verteiler eines H2-Hochdrucksystems in einer seitlichen Schnittansicht,
- Figur 2: eine Hauptbohrung eines Verteilers in einer detaillierten seitlichen Schnittansicht, und
- Figur 3: einen Grundbereich einer Hauptbohrung, die als eine Sackbohrung gestaltet ist, eines Verteilers in einer detaillierten seitlichen Schnittansicht.

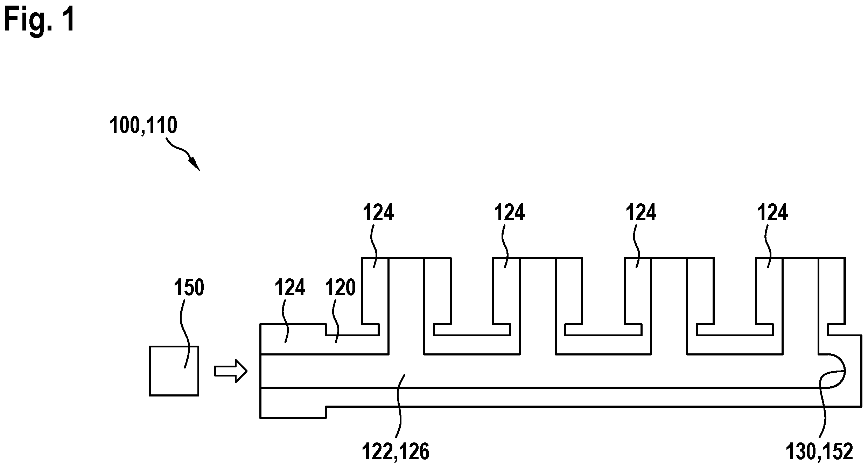

Merkmale mit derselben Funktion bzw. demselben Wirkprinzip sind in Fig. 1 bis 3 jeweils mit denselben Bezugszeichen versehen.

In Fig. 1 wird eine seitliche Schnittansicht eines Verteilers 110 eines H2-Hochdrucksystems 100 gezeigt. Der Verteiler 110 umfasst einen Hauptkörper 120 mit vier radialen und einer axialen Schnittstelle 124 zum Verbinden des Verteilers 110 mit einer Betankungsinfrastruktur 150 und dem H2-Hochdrucksystem 100, wobei die Schnittstellen 124 miteinander verbunden sind, um Fluid über eine Hauptbohrung 122 entlang dem Hauptkörper 120 zu verteilen, wobei die Hauptbohrung 122 in dem Hauptkörper 120 als eine Sackbohrung 126 gestaltet ist. Die Hauptbohrung 122, hier die Sackbohrung 126, umfasst einen abgerundeten Endbereich 152 und einen Grundbereich 130.

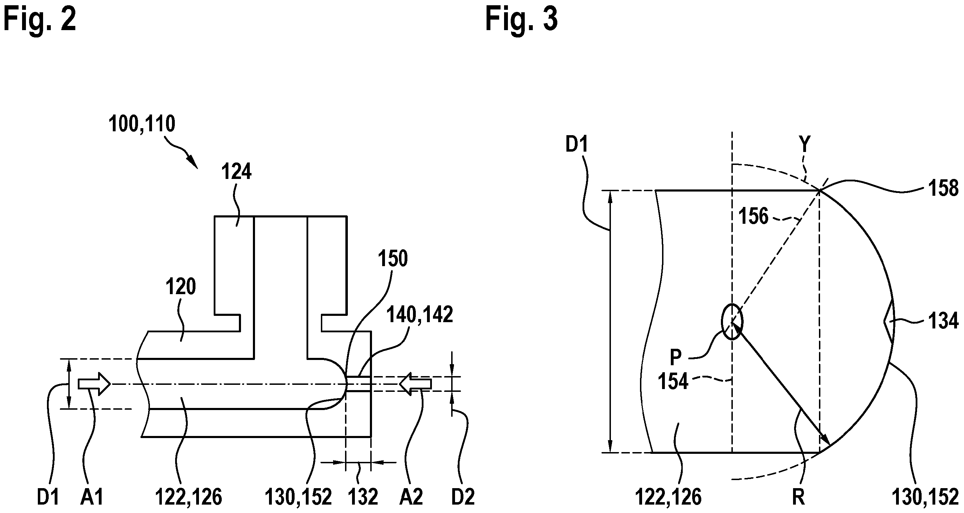

In Fig. 2 wird eine detaillierte seitliche Schnittansicht einer Hauptbohrung 122 eines Verteilers 110 gezeigt. Der Verteiler 110 umfasst einen Hauptkörper 120 mit einer gezeigten radialen Schnittstelle 124. Die gezeigten Schnittstelle 124 ist mit anderen Schnittstellen, die nicht gezeigt werden, verbunden, um Fluid über eine Hauptbohrung 122 entlang dem Hauptkörper 120 zu verteilen. Die Hauptbohrung 122 in dem Hauptkörper 120 ist als eine Sackbohrung 126 gestaltet. Die Hauptbohrung 122 umfasst einen ersten Durchmesser D1, wobei der erste Durchmesser D1 aus einer ersten axialen Richtung A1 ausgearbeitet wird. Der Verteiler 110 umfasst eine Sensorbohrung 140, wobei die Sensorbohrung 140 aus einer zweiten axialen Richtung A2 ausgearbeitet wird, wobei die erste Axialrichtung A1 in einer Linie mit der zweiten axialen Richtung A2 und entgegengesetzt dieser angeordnet ist, wobei die Sensorbohrung 140 eine Sensoreinheit 142 zum Messen in der Hauptbohrung 122 umfasst. Die Sensorbohrung 140 umfasst einen zweiten Durchmesser D2, wobei der erste Durchmesser D1 größer als der zweite Durchmesser D2 ist. Der Hauptkörper 120 umfasst einen Übergangsbereich 150 zwischen dem ersten Durchmesser D1 der Hauptbohrung 122 und dem zweiten Durchmesser D2 der Sensorbohrung oder einer speziellen Gestaltung der zweiten axialen Schnittstelle 140, wobei der Übergangsbereich 150 eine Abrundung umfasst. Die Hauptbohrung 122, hier die Sackbohrung 126, umfasst einen abgerundeten Endbereich 152 und einen Grundbereich 130. Der abgerundete Endbereich 152 und die Hauptbohrung 122 mit dem ersten Durchmesser D1 weisen einen tangentialen Übergang auf. Der Grundbereich 130 umfasst eine axiale Wanddicke 132 von 5 mm bis 20 mm.

In Fig. 3 wird eine detaillierte seitliche Schnittansicht eines Grundbereichs 130 einer Hauptbohrung 122, die als eine Sackbohrung 126 gestaltet ist, eines Verteilers 110 gezeigt. Die Hauptbohrung 122 umfasst einen abgerundeten Endbereich 152, wobei ein Radius R des abgerundeten Endbereichs 152 größer als die Hälfte des ersten Durchmessers D1 ist. Der abgerundete Endbereich 152 umfasst einen Mittelpunkt P, wobei der Mittelpunkt P in der Hauptbohrung 122, innerhalb des ersten Durchmessers D1 der Hauptbohrung 122 angeordnet ist und wobei sich der abgerundete Endbereich 152 um weniger als 180° um den Mittelpunkt P herum erstreckt. Die Hauptbohrung 122 umfasst einen Übergangswinkel Y, wobei sich der Übergangswinkel Y zwischen einer radialen Achse 154 durch den Mittelpunkt P und einer Übergangsachse 156 durch den Mittelpunkt P und einem Übergangspunkt 158 zwischen dem abgerundeten Endbereich 152 und der Hauptbohrung 122 erstreckt, wobei der Übergangswinkel Y kleiner gleich 17°, vorzugsweise kleiner gleich 14°, ist. Der Grundbereich 130 umfasst eine Reliefspitze 134, wobei die Reliefspitze 132 von dem umliegenden Grundbereich 130 vorragt.

## Patentansprüche

1. Verteiler (110) für ein H2-Hochdrucksystem (100), wobei der Verteiler (110) einen Hauptkörper (120) mit einer Anzahl von radialen und/oder axialen Schnittstellen (124) zum Verbinden des Verteilers (110) mit einer Betankungsinfrastruktur (150) und/oder dem H2-Hochdrucksystem (100) umfasst, wobei die Anzahl von Schnittstellen (124) miteinander verbunden sind, um Fluid über eine Hauptbohrung (122) entlang dem Hauptkörper (120) zu verteilen, wobei die Hauptbohrung (122) in dem Hauptkörper (120) als eine Sackbohrung (126) gestaltet ist.

2. Verteiler (110) nach Anspruch 1,
**dadurch gekennzeichnet,**
**dass** die Hauptbohrung (122) einen ersten Durchmesser (D1) umfasst, wobei der erste Durchmesser (D1) aus einer ersten axialen Richtung (A1) ausgearbeitet wird, insbesondere wobei der erste Durchmesser (D1) zwischen 6 mm und 13 mm, insbesondere zwischen 6,5 mm und 12 mm, beträgt.

3. Verteiler (110) nach einem der vorhergehenden Ansprüche,
**dadurch gekennzeichnet,**
**dass** der Verteiler (110) eine Sensorbohrung oder eine spezielle Gestaltung einer zweiten axialen Schnittstelle (140) umfasst, wobei die Sensorbohrung oder die spezielle Gestaltung der zweiten axialen Schnittstelle (140) aus einer zweiten axialen Richtung (A2) ausgearbeitet wird, insbesondere wobei die erste axiale Richtung (A1) in einer Linie mit der zweiten axialen Richtung (A2) und dieser entgegengesetzt angeordnet ist, insbesondere wobei die Sensorbohrung oder die spezielle Gestaltung der zweiten axialen Schnittstelle (140) mindestens eine Sensoreinheit (142) zum Messen in der Hauptbohrung (122) umfasst.

4. Verteiler (110) nach Anspruch 3,
**dadurch gekennzeichnet,**
**dass** die Sensorbohrung oder die spezielle Gestaltung der zweiten axialen Schnittstelle (140) einen zweiten Durchmesser (D2) umfasst, wobei der erste Durchmesser (D1) größer als der zweite Durchmesser (D2) ist, insbesondere um einen Faktor von 1,5 bis 2,5.

5. Verteiler (110) nach Anspruch 4,
**dadurch gekennzeichnet,**
**dass** der Hauptkörper (120) einen Übergangsbereich (150) zwischen dem ersten Durchmesser (D1) der Hauptbohrung (122) und dem zweiten Durchmesser (D2) der Sensorbohrung oder der speziellen Gestaltung der zweiten axialen Schnittstelle (140) umfasst, wobei der Übergangsbereich (150) mindestens eine Abrundung und/oder mindestens eine Abschrägung umfasst.

6. Verteiler (110) nach einem der vorhergehenden Ansprüche,
**dadurch gekennzeichnet,**
**dass** die Hauptbohrung (122), insbesondere die Sackbohrung (126), einen abgerundeten Endbereich (152) umfasst, insbesondere wobei ein Radius (R) des abgerundeten Endbereichs (152) der Hälfte des ersten Durchmessers (D1) entspricht oder größer als die Hälfte des ersten Durchmessers (D1) ist.

7. Verteiler (110) nach Anspruch 6,
**dadurch gekennzeichnet,**
**dass** der abgerundete Endbereich (152) und die Hauptbohrung (122) mit dem ersten Durchmesser (D1) einen tangentialen Übergang aufweisen.

8. Verteiler (110) nach einem der vorhergehenden Ansprüche 6 oder 7,
**dadurch gekennzeichnet,**
**dass** der abgerundete Endbereich (152) einen Mittelpunkt (P) umfasst, wobei der Mittelpunkt (P) in der Hauptbohrung (122), insbesondere in dem ersten Durchmesser (D1) der Hauptbohrung (122), angeordnet ist, und/oder wobei sich der abgerundete Endbereich (152) um weniger als 180° um den Mittelpunkt (P) herum erstreckt.

9. Verteiler (110) nach Anspruch 8,
**dadurch gekennzeichnet,**
**dass** die Hauptbohrung (122) einen Übergangswinkel (Y) umfasst, wobei sich der Übergangswinkel (Y) zwischen einer radialen Achse (154) durch den Mittelpunkt (P) und einer Übergangsachse (156) durch den Mittelpunkt (P) und einem Übergangspunkt (158) zwischen dem abgerundeten Endbereich (152) und der Hauptbohrung (122) erstreckt, wobei der Übergangswinkel (Y) kleiner gleich 17°, vorzugsweise kleiner gleich 14°, beträgt.

10. Verteiler (110) nach einem der vorhergehenden Ansprüche,
**dadurch gekennzeichnet,**
**dass** die Hauptbohrung (122), insbesondere die Sackbohrung (126), einen Grundbereich (130) umfasst, wobei der Grundbereich (130) eine axiale Wanddicke (132) von 5 mm bis 20 mm, vorzugsweise 10 mm bis 15 mm, umfasst und/oder wobei der Grundbereich (130) eine Reliefspitze (134) umfasst, wobei die Reliefspitze (134) von dem umliegenden Grundbereich (130) vorragt.

11. Verteiler (110) nach einem der vorhergehenden Ansprüche,
**dadurch gekennzeichnet,**
**dass** der Verteiler (110), insbesondere der Hauptkörper (120), zumindest zum Teil aus Stahl, insbesondere austenitischem Edelstahl, hergestellt ist und/oder der Verteiler (110) zumindest zum Teil durch ein Schmiedeverfahren, ein Gussverfahren, ein Bearbeitungsverfahren, ein 3D-Druckverfahren und/oder ein Druckgussverfahren hergestellt wird.

12. H2-Hochdrucksystem (100), das mindestens einen Verteiler (110) nach einem der vorhergehenden Ansprüche umfasst.
